# EUROPEAN PATENT SPECIFICATION

(11) **EP 2 902 461 B1**
(45) Date of publication and mention of the grant of the patent: **31.01.2018**
(21) Application number: 14382034.8
(22) Date of filing: 04.02.2014
(51) Int. Cl.: C09J 123/08

(54) **Hot melt pressure sensitive adhesive**
Druckempfindlicher Schmelzkleber
Adhésif thermofusible sensible à la pression

(43) Date of publication of application: 05.08.2015
(73) Proprietor: Repsol, S.A., 28045 Madrid (ES)
(72) Inventor: Caveda Cepas, Susana, 28935 Móstoles- Madrid (ES); Ruiz Orta, Carolina, 28935 Móstoles- Madrid (ES); Rodriguez Guadarrama, Luis Antonio, 28935 Móstoles- Madrid (ES); Montalvo Barroso, Beatriz, 28935 Móstoles- Madrid (ES); Peña García, Begoña, 28935 Móstoles- Madrid (ES); Sierra Escudero, Carmen, 28935 Móstoles- Madrid (ES); Martín Martínez, José Miguel, San Vicente del Raspeig-Alicante (ES)
(74) Representative: ABG Patentes, S.L.

(56) References cited:
- EP-A1- 2 166 055
- WO-A2-2006/001548

## Description

### FIELD OF THE INVENTION

The present invention relates to a hot melt pressure sensitive adhesive (HM PSA) composition as well as to its manufacture and use. The invention also relates to packaging materials comprising said pressure sensitive adhesive.

### BACKGROUND OF THE INVENTION

Holt melt pressure sensitive adhesives are room temperature solid and self-adhesives that form bond with virtually all substrates when pressure is applied. They are widely used for either permanent or removable applications.

These adhesives also find application in resealable packages, such as in food packaging industry, where the user can reseal the package after use thus preserving freshness and allowing easy access to the product. For example, US 3,330,670 discloses reclosable packages for perishable commodities having a pressure sensitive adhesive, said adhesive comprising 50 to 70 wt. % of a tackifying resin, 10 to 15 wt. % of an ethylene-vinyl acetate resin and 5 to 20 wt. % of a plasticizer.

Although these resealable packages are now very common, new adhesives that allow optimizing the opening process and/or the properties of the package are still desirable. In this regard, further hot melt pressure sensitive adhesives that allow good adhesion while maintaining good processing and service properties are still needed. It is also desirable that the adhesive has transparency and good stability, including good resistance to UV radiation to which the packages will be exposed, provide high quality films with no defects, and/or provide recyclable films.

US 2009/0270540 refers to hot melt pressure sensitive adhesives comprising an styrene block copolymer, a tackifying resin, a plasticizer and 1 to 30 wt. % of an ethylene-vinyl acetate copolymer (EVA copolymer). According to this document, higher amounts of EVA in the composition could negatively influence the cold adhesion.

### BRIEF DESCRIPTION OF THE INVENTION

The inventors have found an adhesive composition with an excellent level of adhesion and very good processing and service properties. These hot melt pressure sensitive adhesives are particularly useful in resealable packages for food products.

Therefore, in a first aspect the invention refers to a hot melt pressure sensitive adhesive comprising:
a) 45 to 65 wt. % of at least one ethylene-vinyl acetate copolymer, having a vinyl acetate content of at least 30 wt. %;
b) 30 to 45 wt. % of at least one tackifying resin;
c) 0.1 to 10 wt % of at least one styrene-butadiene-styrene block copolymer;
d) 0 to 5 wt. % of at least one plasticizer; and
e) optionally, one or more further additives;
wherein the sum equals to 100%.

Preferably, the adhesive comprises at least one plasticizer and at least one styrene-butadiene-styrene block copolymer.

In another aspect, the invention is directed to a multilayer film comprising the hot melt pressure sensitive adhesive of the invention.

In another aspect, the invention is directed to the use of the adhesive of the invention or of the multilayer film of the invention to bond substrates.

In a further aspect, the invention refers to a packaging material, preferably a resealable package, comprising the adhesive of the invention or of the multilayer film of the invention.

In another aspect, the invention refers to a process for preparing the adhesive of the invention.

### DETAILED DESCRIPTION OF THE INVENTION

The adhesive compositions of the invention exhibit an excellent level of adhesion. Additionally, these compositions present good processing and service properties, such as e.g. viscosity, softening point, thus enabling their use as pressure sensitive adhesives (PSA) for bonding substrates.

The inventors have observed that excellent adhesive compositions are obtained by using the claimed combination of components. In particular, improved levels of adhesion are observed for compositions having a 45 to 65 wt. % of an ethylene-vinyl acetate copolymer with a vinyl acetate content of at least 30 wt. %, and a 30 to 45 wt. % of a tackifying resin, while maintaining good processing and service properties. This level of adhesion is decreased for compositions having lower amounts of ethylene-vinyl acetate copolymer or lower amounts of tackifying resin. In addition, suitable adhesives can be obtained with the presence of only low amounts of styrene-butadiene-styrene block copolymer (SBS).

Therefore, in a first aspect the invention refers to a hot melt pressure sensitive adhesive comprising:
a) 45 to 65 wt. % of at least one ethylene-vinyl acetate copolymer, having a vinyl acetate content of at least 30 wt. %;
b) 30 to 45 wt. % of at least one tackifying resin;
c) 0.1 to 10 wt % of at least one styrene-butadiene-styrene block copolymer;
d) 0 to 5 wt. % of at least one plasticizer; and
e) optionally, one or more further additives;
wherein the sum equals to 100%.

### Ethylene-vinyl acetate copolymer

The at least one ethylene-vinyl acetate (EVA) copolymer used in the adhesive of the invention has a vinyl acetate content of at least 30 wt. % based on the sum of the monomers. In a particular embodiment, it has a vinyl acetate content in the range of 30 to 90 wt. %, preferably in the range of 30 to 70 wt. %, more preferably in the range of 30 to 50 wt. % and even more preferably in the range of 30 to 40 wt. %.

The at least one EVA copolymer is present in the composition of the invention in an amount between 45 to 65 wt. %, based on the total weight of the adhesive composition. In a particular embodiment, it is present in an amount between 50 to 65 wt. %. In another embodiment, it is present in an amount between 50 to 60 wt. %.

In a particular embodiment, the adhesive of the invention comprises from 50 to 65 wt. % of at least one ethylene-vinyl acetate copolymer, having a vinyl acetate content in the range of 30 to 70 wt. %, preferably in the range of 30 to 50 wt. %.

In a particular embodiment of the invention, the adhesive composition comprises as ethylene-vinyl acetate copolymer only those having a vinyl acetate content of at least 30 wt. % based on the sum of the monomers. Preferably, only those having a vinyl acetate content in the range of 30 to 90 wt. %, preferably in the range of 30 to 70 wt. %, more preferably in the range of 30 to 50 wt. % and even more preferably in the range of 30 to 40 wt. %.

### Tackifying resin

The at least one tackifying resin is present in the adhesive of the invention in an amount of 30% to 45 wt. %, based on the total weight of the adhesive composition. In a particular embodiment, it is present in an amount between 35 to 45 wt. %, preferably between 35 to 40 wt. %.

The term "tackifying resin" is recognized in the art and includes those substances that provide tack to the hot melt adhesive composition. The tackifying resin can be, but is not limited to, rosin resins, hydrocarbon resins, terpene resins and derivatives thereof.

In an embodiment, the tackifying resin is selected from rosin resins (also called colophony resins), rosin ester resins, fully or partly hydrogenated rosin resins, disproportionated rosin resins, fully or partly hydrogenated rosin ester resins, disproportionated rosin ester resins; aromatic, aliphatic or cycloaliphatic hydrocarbon resins, derivatives thereof, and fully or partly hydrogenated aromatic, aliphatic or cycloaliphatic hydrocarbon resins; terpene resins, terpene polymers and copolymers, phenol-modified terpene resins and hydrogenated derivatives thereof.

In a particular embodiment, the at least one tackifying resin is a hydrocarbon resin or a derivative thereof. Preferably, it is selected from aromatic, aliphatic or cycloaliphatic hydrocarbon resins, derivatives thereof, and fully or partly hydrogenated aromatic, aliphatic or cycloaliphatic hydrocarbon resins.

In an embodiment, the at least one tackifying resin is a cycloaliphatic hydrocarbon resin or a derivative thereof, such as an aromatic modified cycloaliphatic hydrocarbon resin.

In a particular embodiment, the at least one tackifying resin is rosin resin (also called colophony resin) or a derivative thereof. Preferably, it is selected from rosin resin, fully or partly hydrogenated rosin resin, disproportionated rosin resin, rosin ester resin, fully or partly hydrogenated rosin ester resin and disproportionated rosin ester resin.

In an embodiment, the at least one tackifying resin is a rosin ester resin or a derivative thereof, such as a fully or partly hydrogenated rosin ester resin or a disproportionated rosin ester resin. Preferably, it is a hydrogenated rosin ester resin, such as a glycerol ester of hydrogenated rosin.

In another embodiment, the tackifying resin is a mixture of a rosin resin or a derivative thereof, and a hydrocarbon resin or a derivative thereof, as defined above.

In an embodiment of the invention, the adhesive composition comprises as tackifying only a rosin resin or a derivative thereof, such as a fully or partly hydrogenated rosin resin, disproportionated rosin resin, a rosin ester resin, a fully or partly hydrogenated rosin ester resin or a disproportionated rosin ester resin. Preferably, only a rosin ester resin or a derivative thereof, such as a fully or partly hydrogenated rosin ester resin or a disproportionated rosin ester resin. More preferably, only a hydrogenated rosin ester resin, such as a glycerol ester of hydrogenated rosin.

In a particular embodiment, the weight ratio of ethylene-vinyl acetate copolymer to tackifying resin in the adhesive composition is 2:1 to 1:1. Preferably, it is between 1.75:1 and 1.25:1, more preferably between 1.6:1 and 1.2:1.

In a particular embodiment, the adhesive of the invention comprises 50 to 65 wt. % of at least one ethylene-vinyl acetate copolymer having a vinyl acetate content of at least 30 wt. %, preferably in the range of 30 to 70 wt. %; and 30 to 40 wt. % of at least one tackifying resin, preferably of a rosin resin or a derivative thereof, such as a hydrogenated rosin ester resin.

### Styrene-butadiene-styrene block copolymer

Inventors have observed that suitable adhesive properties can be obtained with the compositions of the invention with the presence of only small amounts of styrene-butadiene-styrene block copolymer (SBS). In this way, adhesives with good resistance to UV radiation, high quality films with no defects, non-color transparent films and recyclable films can be obtained.

The adhesive composition comprises 0.1 to 10 wt. % of styrene-butadiene-styrene block copolymer, based on the total weight of the composition. Preferably, it comprises from 0.5 to 10 wt. %, more preferably from 1 to 10 wt. %, even more preferably from 5 to 10 wt. %, of the SBS copolymer.

In a particular embodiment, the styrene-butadiene-styrene block copolymer comprises from 10 to 60 mol% of styrenic monomer, preferably from 20 to 40 mol%.

In another embodiment, the adhesive of the invention comprises 50 to 65 wt. % of at least one ethylene-vinyl acetate copolymer having a vinyl acetate content of at least 30 wt. %, preferably in the range of 30 to 70 wt. %; 30 to 40 wt. % of at least one tackifying resin, preferably of a rosin resin or a derivative thereof such as a hydrogenated rosin ester resin; and 0.1 to 10 wt. % of styrene-butadiene-styrene block copolymer, preferably from 1 to 10 wt. %.

### Plasticizer

Though suitable adhesives can be obtained with the compositions of the invention without the need of plasticizers, the inventors have observed that improved levels of adhesion and/or processing and service properties at the required temperatures, e.g. viscosity or flexibility, can be obtained by the addition of plasticizers.

In a particular embodiment, the hot melt pressure sensitive adhesive composition of the invention does not comprise plasticizers.

In a particular embodiment, the hot melt pressure sensitive adhesive composition of the invention comprises at least one SBS block copolymer and no plasticizer.

In a particular embodiment, the hot melt pressure sensitive adhesive composition of the invention comprises at least one SBS block copolymer and at least one plasticizer.

In an embodiment, the adhesive composition comprises 0.1 to 5 wt. % of at least one plasticizer, based on the total weight of the composition. Preferably, it comprises from 0.5 to 5 wt. %, more preferably from 1 to 5 wt. %, of at least one plasticizer.

In a particular embodiment, the at least one plasticizer is selected from medicinal white oils, mineral oils, vegetal or animal oils; alkyl esters of aliphatic or aromatic carboxylic acids, such as adipates, sebacates, phthalates, citrates, benzoates, mellitates and aromatic sulphonates; alcohols, glycols or polyols, including polyether polyols and polyester polyols; and mixtures thereof.

In an embodiment, the at least one plasticizer is an oil. Preferably, it is selected from medicinal white oils (also called paraffin oils), mineral oils, vegetal oils and animal oils. In a preferred embodiment, the at least one plasticizer is a medicinal white oil, preferably a saturated mineral hydrocarbon, more preferably a saturated mineral hydrocarbon with a molecular weight of 200 to 800, even more preferably 500.

In another embodiment, the at least one plasticizer is selected from alcohols, glycols and polyols. Preferably, the at least one plasticizer is selected from C₂-C₁₀ alkyl diols, polyalkylene glycols and polyalkylene polyols. In a preferred embodiment, the plasticizer is a polyether polyol.

In an embodiment, the plasticizer is a polyether polyol having a functionality of 2 or more, preferably 2 to 6, and a molecular weight of 200 or more, preferably of 200 to 6000. In an embodiment, the polyether polyol is a poly(alkylene oxide) polyol wherein the alkylene unit has 2 to 5, preferably 2 or 3, carbon atoms. In an embodiment, the plasticizer is a poly(alkylene oxide) polyol wherein the alkylene unit has 2 to 5, preferably 2 or 3, carbon atoms, having a functionality of 2 or more, preferably 2 to 6, and a molecular weight of 200 or more, preferably of 200 to 6000.

In a particular embodiment, the polyether is a poly(alkylene oxide) polyol wherein the alkylene unit has 2 or 3 carbon atoms, has a functionality of 2 to 6 and a molecular weight of 200 to 6000. Preferably, the polyether is a poly(alkylene oxide) polyol wherein the alkylene unit has 2 or 3 carbon atoms, has a functionality of 3 and a molecular weight of 3000 to 4000.

In a particular embodiment, the polyether polyol is obtained by polymerizing ethylene oxide, propylene oxide or mixtures thereof, with an alcohol selected from propylenglycol, glycerin, pentaerythritol and sorbitol. Preferably, said polyether polyol has a molecular weight of 200 to 6000.

In a particular embodiment, the polyether polyol is obtained by polymerizing ethylene oxide, propylene oxide or mixtures thereof, with glycerol and has a molecular weight of 3000 to 4000.

In another embodiment, the adhesive of the invention comprises 50 to 65 wt. % of at least one ethylene-vinyl acetate copolymer having a vinyl acetate content of at least 30 wt. %, preferably in the range of 30 to 70 wt. %; 30 to 40 wt. % of at least one tackifying resin, preferably of a rosin resin or a derivative thereof such as a hydrogenated rosin ester resin; and 0.1 to 10 wt. % of styrene-butadiene-styrene block copolymer, preferably from 1 to 10 wt. %; and no plasticizer.

In another embodiment, the adhesive of the invention comprises 50 to 65 wt. % of at least one ethylene-vinyl acetate copolymer having a vinyl acetate content of at least 30 wt. %, preferably in the range of 30 to 70 wt. %; 30 to 40 wt. % of at least one tackifying resin, preferably of a rosin resin or a derivative thereof such as a hydrogenated rosin ester resin; 0.1 to 10 wt. % of styrene-butadiene-styrene block copolymer, preferably from 1 to 10 wt. %; and 0.5 to 5 wt. % of at least one plasticizer, preferably a polyether polyol.

### Additives

The adhesive composition of the invention can comprise one or more further additives.

Preferably, the hot melt pressure sensitive adhesive of the invention comprises 0 to 5 wt. % of one or more further additives, based on the total weight of the adhesive composition. In a particular embodiment, it comprises 0.01 to 5 wt. % of one or more further additives, preferably 0.01 to 3 wt. %, more preferably 0.05 to 2 wt. %, even more preferably 0.05 to 0.5 wt. %.

Typical additives of hot melt pressure sensitive adhesives are well known in the art. Examples of these additives include antioxidants, such as sterically hindered phenols, phosphites, thioethers or thioesters; stabilizers; antislipping agents, such as amide derivatives; colorants, such as titanium dioxide; fillers, such as talc, clay and calcium carbonate.

In a particular embodiment, the composition of the invention comprises 0 to 5 wt. % of at least one antioxidant, based on the total weight of the adhesive composition. In a particular embodiment, it comprises 0.01 to 5 wt. % of at least one antioxidant, preferably 0.01 to 3 wt. %, more preferably 0.05 to 2 wt. %, even more preferably 0.05 to 0.5 wt. %.

In an embodiment, the at least one antioxidant is selected from sterically hindered phenols, phosphites and mixtures thereof. Preferably, it is a mixture of a sterically hindered phenol and a phosphite.

Sterically hindered phenols are well known in the art and refer to phenolic compounds which contain sterically bulky radicals, such as tert-butyl, in close proximity to the phenolic hydroxyl group thereof. In particular, they may be characterized by phenolic compounds substituted with tert-butyl groups in at least one of the ortho positions relative to the phenolic hydroxyl group. In a particular embodiment, the sterically hindered phenol has tert-butyl groups in both ortho-positions with respect to the hydroxyl group. Representative hindered phenols include pentaerythritol tetrakis(3-(3,5-di-tert-butyl-4-hydroxyphenyl)propionate), 1,3,5-trimethyl-2,4,6-tris(3,5-di-tert-butyl-4-hydroxybenzyl) benzene, n-octadecyl-3(3,5-di-tert-butyl-4-hydroxyphenyl) propionate, 4,4'-methylenebis(4-rnethyl-6-tert-butylphenol), 4,4'-thiobis(6-tert-butyl-o-cresol), 6-(4-hydroxyphenoxy)-2,4-bis(n-ocytlthio)-1,3,5-triazine, 2,4, 6- tris(4-hydroxy-3,5-di-tert-butyl-phenoxy)-1,3,5-triazine, di-n-octadecyl-3,5-di-tert-butyl-4-hydroxybenzylphosphonate, 2-(n-octylthio)ethyl-3,5-di-tert-butyl-4-hydroxybenzoate, and sorbitol hexa-(3,3,5-di-tert-butyl-4-hydroxy-phenyl) propionate.

In a particular embodiment, phosphites are aromatically substituted phosphites, preferably substituted or unsubstituted triphenyl phosphites. Examples of these phosphites include triphenyl phosphite, trisnonylphenyl phosphite, and tris(2,4-di-tert-butylphenyl)-phosphite.

In a particular embodiment, the composition of the invention comprises 0.05 to 0.5 wt. % of at least one antioxidant selected from sterically hindered phenols, aromatically substituted phosphites and mixtures thereof. In an embodiment, the antioxidant is a mixture of a sterically hindered phenol and an aromatically substituted phosphite, e.g. a mixture of pentaerythritol tetrakis(3-(3,5-di-tert-butyl-4-hydroxyphenyl)propionate) and tris(2,4-di-tert-butylphenyl)-phosphite.

In another embodiment, the adhesive of the invention comprises 50 to 65 wt. % of at least one ethylene-vinyl acetate copolymer having a vinyl acetate content of at least 30 wt. %, preferably in the range of 30 to 70 wt. %; 30 to 40 wt. % of at least one tackifying resin, preferably of a rosin resin or a derivative thereof such as a hydrogenated rosin ester resin; 0.1 to 10 wt. % of styrene-butadiene-styrene block copolymer, preferably from 1 to 10 wt. %; and no plasticizer; and 0 to 5 wt. % of one or more further additives, preferably 0.05 to 0.5 wt. % of at least one antioxidant.

In another embodiment, the adhesive of the invention comprises 50 to 65 wt. % of at least one ethylene-vinyl acetate copolymer having a vinyl acetate content of at least 30 wt. %, preferably in the range of 30 to 70 wt. %; 30 to 40 wt. % of at least one tackifying resin, preferably of a rosin resin or a derivative thereof such as a hydrogenated rosin ester resin; 0.1 to 10 wt. % of styrene-butadiene-styrene block copolymer, preferably from 1 to 10 wt. %; 0.5 to 5 wt. % of at least one plasticizer, preferably a polyether polyol; and 0 to 5 wt. % of one or more further additives, preferably 0.05 to 0.5 wt. % of at least one antioxidant.

### Process of manufacture

The hot melt pressure sensitive adhesive of the invention can be prepared by conventional methods, for example, by mixing the components of the adhesive composition. In an embodiment, mixing of the components to a homogeneous melt takes places at a temperature from 100 to 200°C, preferably from 105 to 180°C. This process can be carried out in an extruder.

### Uses of the hot melt adhesives

The invention further provides the use of the hot melt pressure sensitive adhesives of the invention to bond substrates. The adhesive of the invention can be detached again from the substrate surfaces. Preferably, the hot melt pressure sensitive adhesive of the invention are used to reversibly bond two substrates.

The hot melt adhesives of the invention may be used to bond a broad spectrum of different solid substrates. These substrates may be flexible or, alternatively, rigid. Preferably, one of the substrates to be bonded is thin and flexible, in the form more particularly of films, multi-layer films, paper or multi-layer constructions from paper and polymer films.

The hot melt pressure sensitive adhesives according to the invention can be used to bond substrates such as glass, coated or uncoated paper, paperboard packaging and plastics, such as, for example, polyethylene terephthalate (PET), polyethylene naphthalate (PEN), polypropylene (PP) and polyethylene (PE), polyvinyl chloride (PVC) and polystyrene (PS). Thin flexible substrates such as films, multi-layer films or paper can then be glued to such solid substrates.

The adhesive composition of the invention is preferably used to bond plastic substrates, particularly substrates made of polyethylene, polypropylene, polystyrene, polyvinyl chloride polyethylene terephthalate, polyethylene naphthalate or cellophane.

In a particular embodiment, the adhesive of the invention is used for reversible bonding of two flexible substrates. The invention further provides the bonded, preferably reversibly bonded, substrates comprising the hot melt adhesive of the invention.

In an embodiment, the adhesive of the invention is used in the manufacture of packaging or parts of packaging such as lids, trays, containers, pouches, flow packs or blisters for food, pharmaceuticals, cosmetics as well as industrial applications. In a particular embodiment, the adhesive of the invention is used in the manufacture of resealable packaging or parts of resealable packaging for food products.

The invention is also directed to the packaging or parts of packaging, such as lids, trays, containers, bags, pouches, flow packs or blisters, comprising the adhesive of the invention.

Resealable packages generally comprise a container (e.g. a tray) to which a multilayer film structure is welded. This multilayer film comprises a welding layer (generally made of a polyolefin, such as polyethylene or polypropylene), an adhesive layer and several upper layers (generally made of PET, EVOH, PA, OPA, OPP, etc., and combinations thereof), with a binder layer between these layers when needed, thus giving rise to a 3- or 5-, 7-, 9- or 11-layer film, respectively.

Therefore, in another aspect, the invention is directed to a multilayer film comprising the adhesive of the invention, as well as to the use of said multilayer film to bond substrates. In a particular embodiment, it is a 3-layer film, for example a film comprising (a) a polyolefin layer (e.g. PE or PP), (b) an intermediate layer comprising the adhesive composition of the invention and (c) an outer layer of polymer, preferably a polyolefin (e.g. PE or PP). In another embodiment, it is a 5-layer film, for example (a) a film comprising a polyolefin layer (e.g. PE or PP), (b) an intermediate layer comprising the adhesive composition of the invention, (c) an EVOH layer, (d) a binder layer and (e) an outer layer of polymer, preferably PE or PP. In another embodiment, the multilayer film is a 7-, 9- or 11-layer film.

These multilayer film structures can be obtained by conventional means.

In another aspect, the invention is directed to a resealable package, or parts of a resealable package, comprising the adhesive composition or the multilayer film according to the invention.

In a particular embodiment, the resealable package or parts of a resealable package are selected from a tray, a container, a bag, a pouch, a lid and a blister.

The following examples merely illustrate the invention. Those skilled in the art will recognize many variations that can be performed without altering the functioning of the invention.

### EXAMPLES

### A. Materials.

The following starting materials were used to prepare the compositions of the invention:
- Styrene-butadiene-styrene block copolymer: Solprene® 4318 (Dynasol).
- Ethylene-vinyl acetate copolymer: Alcudia® PA470 (Repsol Quimica)
- Tackifying resins: Foralyn™ 90 (Eastman Chemical Company) and Escorez 5600 (Exxon).
- Plasticizers: M70 oil (Repsol) and Alcupol® C4811 (Repsol Quimica).
- Antioxidant: Irgafos 168/Irganox 1010 (BASF).

The composition of each sample is shown in Table II.

### B. Preparation of the hot melt pressure sensitive adhesives.

Formulations were prepared in a twin-screw extruder having L/D 25 and Φ16 mm. A physical mixture of the components of the formulation was fed to the extruder through a main feeder. Extrusion settings for each sample are shown in Table I.

**Table I**

| Sample | Temperature profile (°C) | P (bar) | Screw speed (rpm) | Torque (%) | Flow rate (%) |
|---|---|---|---|---|---|
| Ex. 1 | 180-180-180-180-180-180 | 1 | 150 | 30 | 15 |
| Ex. 2 | 105-120-115-115-115-115 | 1 | 150 | 35 | 11 |
| Ex. 3 | 115-115-115-115-120-105 | - | 150 | 29 | 13 |
| Ex. 4 | 115-115-115-115-120-105 | - | 150 | 17 | 6 |
| Ex. 5 | 180-180-180-180-180-180 | 1 | 150 | 30 | 15 |
| Ex. 6 | 180-180-180-180-180-180 | 1 | 150 | 30 | 15 |
| Ex. 7 | 150-150-150-150-150-150 | 1 | 150 | 24 | 15 |
| Ex. 8 | 170-170-170-170-170-170 | 1 | 150 | 30 | 15 |
| Ex. 9 | 105-115-115-120-140-100 | 2 | 150 | 41 | 17 |
| Ex. 10 | 120-125-125-140-160-120 | 7 | 150 | 34 | 17 |

### C. Properties of the hot melt adhesives

A well-known technique for determining the tackiness of an adhesive is the Dahlquist's Criterion which considers that Storage Modulus G' of the adhesive should be less than 3·10⁵ Pa. This is the maximum modulus that an adhesive should have to be able to wet the surface and produce molecular contact in order to form physical bonds between adhesive and substrate (Adhesion Science and Engineering Volume 2. The Mechanics of Adhesion Surfaces, Chemistry and Applications; S. S. Heddleson, D.D. Hamann, D.R. Lineback. Cereal Chem. 1993, 70 (6) 774). As an alternative to modulus, the measurement of the creep compliance J(t) results more exact. The creep compliance J(t) is defined as the change in strain as a function of time under application of a constant stress. Creep compliance has an inverse relation with storage modulus G' and the Dalhquist Criterion establishes that a material is considered tacky if J(t) is greater than 3x10⁻⁶ Pa⁻¹ for a contact time of 1 second in the torsion test.

Creep compliance measurements were performed on a strain controlled dynamic rheometer TA-ARES 3 (0.5 %) under isothermal conditions at 40 ° C as a function of frequency in the range of 0.01 to 15 Hz. The geometry used was parallel plate, with a diameter of 25 mm and a gap of 1.8 mm. The results of these measurements are set out in Table II.

**Table II**

| | **Ex 1** | **Ex 2** | **Ex 3** | **Ex 4** | **Ex 5 (comp)** | **Ex 6 (comp)** | **Ex 7 (comp)** | **Ex 8 (comp)** | **Ex 9 (comp)** | **Ex 10 (comp)** |
|---|---|---|---|---|---|---|---|---|---|---|
| Components (wt%)^{1,2} | | | | | | | | | | |
| SBS (S-4318) | 10 | 10 | 10 | 10 | | 40 | 30 | 20 | 40 | 60 |
| EVA (PA470) | 50 | 50 | 50 | 50 | 60 | 40 | 60 | 40 | 20 | |
| Escorez E5600 | | 10 | | | | | | | | |
| Foralyn 90 | 40 | 30 | 35 | 35 | 40 | 20 | 10 | 40 | 40 | 40 |
| Kristol oil M70 | | | 5 | | | | | | | |
| Polyol C4811 | | | | 5 | | | | | | |
| Properties | | | | | | | | | | |
| Dahlquist Criterion J (t) (MPa⁻¹) | 2,3E-05 | 3,4E-05 | 5,2E-05 | 2,7E-05 | 1,2E-05 | 1,7E-06 | 3,7E-06 | 9,6E-06 | 5,9E-06 | 9,0E-0E |

| | | | | | | | | | | |
|---|---|---|---|---|---|---|---|---|---|---|
| ¹ Based on the total weight of SBS copolymer + EVA copolymer + tackifying resin + plasticizer. ² All the compositions contain 0.1 wt. % of the antioxidant I-168/I-1010, based on the total weight of the composition. | | | | | | | | | | |

As shown in Table II, the adhesive compositions of the invention present very good levels of adhesion (>10⁻⁵). In contrast, compositions with low amounts of EVA copolymer (see comparative examples 6, 8-10) or with low amounts of tackifying resin (see comparative examples 6-7) have poor levels of adhesion according to the Dahlquist criterion.

Better tackiness was observed for formulations comprising low amounts of SBS copolymer (Ex. 1-2) compared to those having no SBS copolymer (Comparative Ex. 5). Tackiness was also improved by the addition of plasticizers (Ex. 1-2 v Ex. 3-4).

## Claims

1. A hot melt pressure sensitive adhesive comprising:
a) 45 to 65 wt. % of at least one ethylene-vinyl acetate copolymer, having a vinyl acetate content of at least 30 wt. %;
b) 30 to 45 wt. % of at least one tackifying resin;
c) 0.1 to 10 wt. % of at least one styrene-butadiene-styrene block copolymer;
d) 0 to 5 wt. % of at least one plasticizer; and
e) optionally, one or more further additives;
wherein the sum equals to 100%.

2. The hot melt pressure sensitive adhesive according to claim 1, comprising 0.1 to 5 wt. % of at least one plasticizer.

3. The hot melt pressure sensitive adhesive according to any previous claim, wherein the ethylene-vinyl acetate copolymer has a vinyl acetate content in the range of 30 to 90 wt. %.

4. The hot melt pressure sensitive adhesive according to any previous claim, comprising 45 to 65 wt. % of at least one ethylene-vinyl acetate copolymer, having a vinyl acetate content in the range of 40 to 90 wt. %, and 0.1 to 10 wt. % of at least one styrene-butadiene-styrene block copolymer.

5. The hot melt pressure sensitive adhesive according to any previous claim, comprising 0.1 to 10 wt. % of at least one styrene-butadiene-styrene block copolymer and 0.1 to 5 wt. % of at least one plasticizer.

6. The hot melt pressure sensitive adhesive according to any previous claim, wherein the tackifying resin is selected from rosin resins, rosin ester resins, fully or partly hydrogenated rosin resins, disproportionated rosin resins, fully or partly hydrogenated rosin ester resins, disproportionated rosin ester resins; aromatic, aliphatic or cycloaliphatic hydrocarbon resins, derivatives thereof, and fully or partly hydrogenated aromatic, aliphatic or cycloaliphatic hydrocarbon resins; terpene resins, terpene polymers and copolymers, phenol-modified terpene resins and hydrogenated derivatives thereof.

7. The hot melt pressure sensitive adhesive according to claim 6, wherein the tackifying resin is selected from rosin resins, rosin ester resins, fully or partly hydrogenated rosin resins, and fully or partly hydrogenated rosin ester resins.

8. The hot melt pressure sensitive adhesive according to any previous claim, wherein the plasticizer is selected from medicinal white oils, mineral oils, vegetal or animal oils; alkyl esters of aliphatic or aromatic carboxylic acids, such as adipates, sebacates, phthalates, citrates, benzoates, mellitates and aromatic sulphonates; alcohols, glycols or polyols, including polyether polyols and polyester polyols; and mixtures thereof.

9. The hot melt pressure sensitive adhesive according to claim 8, wherein the plasticizer is selected from C₂-C₁₀ alkyl diols, polyalkylene glycols and polyalkylene polyols.

10. The hot melt pressure sensitive adhesive according to any previous claim, wherein the additives are selected from antioxidants, antisliping agents, fillers, stabilizers and colorants.

11. A multilayer film comprising a hot melt pressure sensitive adhesive according to any of claims 1 to 10.

12. Use of a hot melt pressure sensitive adhesive according to any of claims 1 to 10 or a multilayer film according to claim 11 to bond substrates.

13. The use according to claim 12, wherein two substrates are bonded to one another reversibly.

14. A resealable package comprising a hot melt pressure sensitive adhesive according to any of claims 1 to 10 or a multilayer film according to claim 11.

## Patentansprüche

1. Ein druckempfindlicher Schmelzkleber umfassend:
a) 45 bis 65 Gew.-% mindestens eines Ethylen-Vinylacetat-Copolymers mit einem Vinylacetat-Gehalt von mindestens 30 Gew.-%;
b) 30 bis 45 Gew.-% mindestens eines Klebeharzes;
c) 0,1 bis 10 Gew.-% mindestens eines Styrol-Butadien-Styrol-Blockcopolymers;
d) 0 bis 5 Gew.-% mindestens eines Weichmachers; und
e) optional, ein oder mehr weitere Additive;
wobei die Summe gleich 100 % ist.

2. Der druckempfindliche Schmelzkleber gemäß Anspruch 1, umfassend 0,1 bis 5 Gew.-% mindestens eines Weichmachers.

3. Der druckempfindliche Schmelzkleber gemäß einem vorherigen Anspruch, wobei das Ethylen-Vinylacetat-Copolymer einen Vinylacetatgehalt im Bereich von 30 bis 90 Gew.-% hat.

4. Der druckempfindliche Schmelzkleber gemäß einem vorherigen Anspruch, umfassend 45 bis 65 Gew.-% mindestens eines Ethylens-Vinylacetat-Copolymers mit einem Vinylacetatgehalt im Bereich von 40 bis 90 Gew.-%, und 0,1 bis 10 Gew.-% mindestens eines Styrol-Butadien-Styrol-Blockcopolymers.

5. Der druckempfindliche Schmelzkleber gemäß einem vorherigen Anspruch, umfassend 0,1 bis 10 Gew.-% mindestens eines Styrol-Butadien-Styrol-Blockcopolymers und 0,1 bis 5 Gew.-% mindestens eines Weichmachers.

6. Der druckempfindliche Schmelzkleber gemäß einem vorherigen Anspruch, wobei das Klebeharz ausgewählt ist aus Kolophoniumharzen, Kolophoniumesterharzen, vollständig oder teilweise hydrierten Kolophoniumharzen, disproportionierten Kolophoniumharzen, vollständig oder teilweise hydrierten Kolophoniumesterharzen, disproportionierten Kolophoniumesterharzen; aromatischen, aliphatischen oder cycloaliphatischen Hydrocarbonharzen, Derivaten davon, und vollständig oder teilweise hydrierten aromatischen, aliphatischen oder cycloaliphatischen Hydrocarbonharzen; Terpenharzen, Terpenpolymeren und -copolymeren, phenolmodifizierten Terpenharzen und hydrierten Derivaten davon.

7. Der druckempfindliche Schmelzkleber gemäß Anspruch 6, wobei das Klebeharz ausgewählt ist aus Kolophoniumharzen, Kolophoniumesterharzen, vollständig oder teilweise hydrierten Kolophoniumharzen und vollständig oder teilweise hydrierten Ko lophoniumesterharzen.

8. Der druckempfindliche Schmelzkleber gemäß einem vorherigen Anspruch, wobei der Weichmacher ausgewählt ist aus medizinischen Weißölen, Mineralölen, pflanzlichen oder tierischen Ölen; Alkylester von aliphatischen oder aromatischen Carboxylsäuren, wie Adipaten, Sebacaten, Phthalaten, Citraten, Benzoaten, Mellitaten und aromatischen Sulphonaten; Alkoholen, Glykolen oder Polyolen, einschließlich Polyetherpolyolen und Polyesterpolyolen; und Mischungen davon.

9. Der druckempfindliche Schmelzkleber gemäß Anspruch 8, wobei der Weichmacher ausgewählt ist aus C₂-C₁₀-Alkyldiolen, Polyalkylenglycolen und Polyalkylenpolyolen.

10. Der druckempfindliche Schmelzkleber gemäß einem vorherigen Anspruch, wobei die Additive ausgewählt sind aus Antioxidantien, rutschhemmenden Mitteln, Füllmaterialien, Stabilisatoren und Farbstoffen.

11. Ein mehrlagiger Film umfassend einen druckempfindlichen Schmelzkleber gemäß einem der Ansprüche 1 bis 10.

12. Verwendung eines druckempfindlichen Schmelzklebers gemäß einem der Ansprüche 1 bis 10 oder eines mehrlagigen Films gemäß Anspruch 11 zur Bindung von Substraten.

13. Die Verwendung gemäß Anspruch 12, wobei zwei Substrate reversibel aneinander gebunden werden.

14. Eine wiederverschließbare Verpackung umfassend einen druckempfindlichen Schmelzkleber gemäß einem der Ansprüche 1 bis 10 oder einen mehrschichtigen Film gemäß Anspruch 11.

## Revendications

1. Adhésif sensible à la pression, thermofusible, comprenant :
a) 45 à 65 % en poids d'au moins un copolymère éthylène-acétate de vinyle, ayant une teneur en acétate de vinyle d'au moins 30 % en poids ;
b) 30 à 45 % en poids d'au moins une résine tackifiante ;
c) 0,1 à 10% en poids d'au moins un copolymère bloc styrène-butadiène-styrène ;
d) 0 à 5 % en poids d'au moins un plastifiant ; et
e) facultativement, un ou plusieurs additifs supplémentaires ;
la somme étant égale à 100 %.

2. Adhésif sensible à la pression, thermofusible, selon la revendication 1, comprenant 0,1 à 5 % en poids d'au moins un plastifiant.

3. Adhésif sensible à la pression, thermofusible, selon l'une quelconque des revendications précédentes, dans lequel le copolymère éthylène-acétate de vinyle a une teneur en acétate de vinyle dans la plage de 30 à 90 % en poids.

4. Adhésif sensible à la pression, thermofusible, selon l'une quelconque des revendications précédentes, comprenant 45 à 65 % en poids d'au moins un copolymère éthylène-acétate de vinyle, ayant une teneur en acétate de vinyle dans la plage de 40 à 90 % en poids, et 0,1 à 10 % en poids d'au moins un copolymère bloc styrène-butadiène-styrène.

5. Adhésif sensible à la pression, thermofusible, selon l'une quelconque des revendications précédentes, comprenant 0,1 à 10 % en poids d'au moins un copolymère bloc styrène-butadiène-styrène et 0,1 à 5 % en poids d'au moins un plastifiant.

6. Adhésif sensible à la pression, thermofusible, selon l'une quelconque des revendications précédentes, dans lequel la résine tackifiante est choisie parmi des résines de colophane, des résines d'ester de colophane, des résines de colophane entièrement ou partiellement hydrogénées, des résines de colophane disproportionnées, des résines d'ester de colophane entièrement ou partiellement hydrogénées, des résines d'ester de colophane dismutées ; des résines hydrocarbonées aromatiques, aliphatiques ou cycloaliphatiques, leurs dérivés, et des résines hydrocarbonées aromatiques, aliphatiques ou cycloaliphatiques, entièrement ou partiellement hydrogénées ; des résines terpéniques, des polymères et copolymères terpéniques, des résines terpéniques modifiées par phénol et leurs dérivés hydrogénés.

7. Adhésif sensible à la pression, thermofusible, selon la revendication 6, dans lequel la résine tackifiante est choisie parmi des résines de colophane, des résines d'ester de colophane, des résines de colophane entièrement ou partiellement hydrogénées, et des résines d'ester de colophane entièrement ou partiellement hydrogénées.

8. Adhésif sensible à la pression, thermofusible, selon l'une quelconque des revendications précédentes, dans lequel le plastifiant est choisi parmi des huiles blanches médicinales, des huiles minérales, des huiles végétales ou animales ; des esters alkyliques d'acides carboxyliques aliphatiques ou aromatiques, tels que des adipates, des sébaçates, des phtalates, des citrates, des benzoates, des mellitates et des sulfonates aromatiques ; des alcools, des glycols ou des polyols, y compris des polyols de polyéther et des polyols de polyester ; et leurs mélanges.

9. Adhésif sensible à la pression, thermofusible, selon la revendication 8, dans lequel le plastifiant est choisi parmi des alkyl diols en C₂-C₁₀, des polyalkylènes glycols et des polyalkylènes polyols.

10. Adhésif sensible à la pression, thermofusible, selon l'une quelconque des revendications précédentes, dans lequel les additifs sont choisis parmi des antioxydants, des agents antidérapants, des charges, des stabilisants et des colorants.

11. Film multicouche comprenant un adhésif sensible à la pression, thermofusible, selon l'une quelconque des revendications 1 à 10.

12. Utilisation d'un adhésif sensible à la pression, thermofusible, selon l'une quelconque des revendications 1 à 10 ou d'un film multicouche selon la revendication 11 pour lier des substrats.

13. Utilisation selon la revendication 12, dans laquelle deux substrats sont liés l'un à l'autre de façon réversible.

14. Emballage refermable comprenant un adhésif sensible à la pression, thermofusible, selon l'une quelconque des revendications 1 à 10 ou un film multicouche selon la revendication 11.
